# EUROPEAN PATENT APPLICATION

(11) **EP 1 427 134 A2**
(43) Date of publication of application: **09.06.2004**
(21) Application number: 03027444.3
(22) Date of filing: 01.12.2003
(51) Int. Cl.: H04L 12/24

(54) **System and method for management of communications resources**

(30) Priority: 05.12.2002 GB 0228367
(71) Applicant: BTS Holdings PLC, Wallington, Surrey SM6 0DD (GB)
(72) Inventor: Chopra, Subhash, Sanderstead Surrey CR2 0RU (GB); Kendall, Jon, Redhill Surrey RH1 6EQ (GB); Balestrini, Dick, Cove Farnborough Hampshire GU14 9PH (GB)
(74) Representative: Downing, Michael Philip

(57) **Abstract**

A communications management system comprises a networked computing means on which is provided a translation agent with access to usage data of a plurality of communications resources, arranged to consolidate the usage data of the plurality of communications resources by converting system-specific data to data having a common format, and a processing agent arranged to extract/infer duration measurement and to calculate staff, transmission & infrastructure costs. Suitable communications resources include PBX telephone systems, IP telephony systems, email servers, proxy servers, firewalls, switches, routers, web servers and mobile telephony, and emerging media such as video conferencing systems etc. An at least semi-permanent data link from the networked computing means to a further computing means will enable it to obtain data from communications resources elsewhere. The data link can be the Internet or a dial-up connection, for example to a remote PC. The processing agent is preferably arranged to extract a duration measurement for communications events included in the usage data. For types of communications events where no duration data is stored, the processing agent includes rules for inferring a duration measurement in respect of at least communications events without a recorded duration. Suitable rules include a defined time per byte of data transmitted, a defined time for any data transmission, and a defined time per byte of data transmitted up to a defined maximum. The processing agent can then retain staff cost data for conversion of duration measurements into staff cost.

## Description

### FIELD OF THE INVENTION

The present invention relates to a system and method for the management of communications resources.

### BACKGROUND ART

Public and private sector organisations are becoming increasingly dependent on phone, email, web, mobile and other emerging media. This means that their staff are spending more time than ever before on communications, changing the way such organisations operate and raising new management issues. When taken together, staff, transmission and infrastructure costs of communication can constitute a significant proportion of the total overhead, perhaps representing the largest uncontrolled cost in the organisation.

US 6,292,801 discloses a communications management system, but this simply seeks to maintain a database of the communications resources available to specific users and to track their usage. The principal aim of the system appears to be to detect cross-media abuse of the resources, on the basis that abuse of any one medium may be insufficient to cause concern when looked at individually, but if this level of abuse is applied across media then the overall level may be of concern.

Whilst this system may be of use in organisations with significant numbers of untrustworthy or disloyal staff, it does not assist in analysing the communications usage to resolve the issues set out above.

### SUMMARY OF THE INVENTION

The present invention therefore provides a communications management system, comprising a networked computing means on which is provided a translation agent with access to usage data of a plurality of communications resources,a database, provided in a form accessible to the translation agent, and including data in the system-specific format to assist the translation agent to convert this to the common format, the translation agent being arranged to consolidate the usage data of the plurality of communications resources by consulting the database and converting system-specific data to data having a common format, and a processing agent arranged to extract and/or infer duration measurement and to calculate staff, transmission & infrastructure costs.

Suitable communications resources include PBX telephone systems, IP telephony systems, email servers, proxy servers, firewalls, switches, routers, web servers and mobile telephony, and emerging media such as video conferencing systems etc.

The networked computing means can include a removable data storage reader, such as a CD-ROM-compatible drive, to which the acquisition agent has access to allow externally created log files to be made available to the translation agent.

An at least semi-permanent data link from the networked computing means to a further computing means will enable it to obtain data from communications resources elsewhere. The data link can be the Internet or a dial-up connection, for example to a remote PC.

An acquisition agent can be provided, to acquire usage data of the plurality of communications resources and to provide this to the translation agent thereby to offer it access to those records. This has the advantage that the data acquisition process can be managed independently of the translation process.

The processing agent is preferably arranged to extract a duration measurement for communications events included in the usage data. Some types of communications events (for example email logs) do not store duration data and therefore the processing agent preferably also includes at least one rule for inferring a duration measurement in respect of at least communications events without a recorded duration. Suitable rules include a defined time per byte of data transmitted, a defined time for any data transmission, and a defined time per byte of data transmitted up to a defined maximum. The first of these thus allows a time for typing an email dependent on the message length. The last takes account of email attachments; these will usually contribute the bulk of the message size but are not necessarily typed out as message text. For web, the system takes the events presented in the logs and converts them into a *web session.* A web session is defined as all communication with a single web site within a definable timeout period.

The processing agent can then retain staff cost data for conversion of duration measurements (or inferred duration measurements) into staff cost. The processing agent can include a plurality of staff costs for a plurality of different staff grades varied as appropriate to date, day of week and time of day.

The processing agent can then retain transmission cost data (public network call charges, proportion of Internet connection charge etc) for conversion of a combination of any of duration (or inferred duration measurement) and size into transmission cost. The processing agent can include a plurality of transmission costs for various combinations of destinations, media, routes, dates, days of week and times of day.

The processing agent can then retain infrastructure cost data (network connections, PCs, telephone equipment etc) for conversion of a combination of any of duration (or inferred duration measurements) and size into infrastructure cost. The processing agent can include a plurality of infrastructure costs for different infrastructure types varied as appropriate to different locations, routes, dates, days of week and times of day.

From time to time, communications will be sent to or received from new addresses which are not identified in the database. These addresses may need to be identified individually and/or by category. It is preferred that the processing agent highlights addresses present in the usage data but not identified in the database. When this occurs, the processing agent preferably causes a message to be sent, or to be sent where such an address is detected above a pre-set threshold. The threshold can be defined (for example) as a pre-set number of occurrences within a pre-set time interval. The message can be sent to an address local to the networked computing means and associated with the communications event in which the unknown address was detected. The local address is preferably one included in the communications event, or one correlated with the local address included in the communications event but associated with a different communications channel. Ideally, the message is sent via email, including a link to a web page adapted to accept identifying information for the unknown address and to update the database accordingly.

An analysis agent is preferably provided, capable of selecting, aggregating and summarising the processed data.

This communications management system allows routine monitoring of staff communications, within the spirit and letter of recent UK legislation touching on Human Rights, Regulation of Investigatory Powers and Data Protection, to assess total cost and utilisation. It measures staff communications (incoming, outgoing, internal) in common currency (units / staff time / staff cost / transmission cost / infrastructure cost) across disparate media (phone, email, web & mobile and other emerging media). It identifies the parties involved in the communication (to the degree appropriate to the organisation's needs). It allows organisations to attribute communications activity and cost to staff involved in the communication (individually and/or by category e.g. department) and also to the external parties to the communication (individually and/or by category e.g. customers). It therefore allows management to consider not only where in the organisation communications activity and cost arose but also on what it was incurred (by reference to the external party/category) and how this fits the overall objectives of the organisation. Furthermore, it allows management to understand the different relative costs of different communications resources, informing decisions, in the first instance, on optimising usage and, following on from this, on infrastructure investments. Without such information, organisations tend to upgrade only the media which are already at capacity, whereas the optimal choice may be to change business processes or to upgrade different media and use these in substitution for the media which are at capacity.

It allows management to ask questions such as:
- Do you know your customers' preferred media?
- Do you know what level of communication your customers expect?
- Is most of your communication with your most important customers?
- Do you know what contact each part of your organisation has with customers, using which medium, and in which direction?
- Can you check how well your CRM system is performing?
- Do comparable staff exhibit the same pattern of communication?
- Do you know where the communications bottlenecks are?
- Can resources be freed up for more important communication?
- Do you know the difference in cost from using different media?
- What communications cost information is fed into other systems?
- Are there any audit trail issues?

Thus, the present invention provides a complete communications management system which, in preferred embodiments, can provide overall utilisation (unit activity, duration) and cost (staff cost, transmission cost and infrastructure cost) information relating to communications resources both in-house and remote, the utilisation and cost being attributable both to staff and as appropriate to external parties.

### BRIEF DESCRIPTION OF THE DRAWINGS

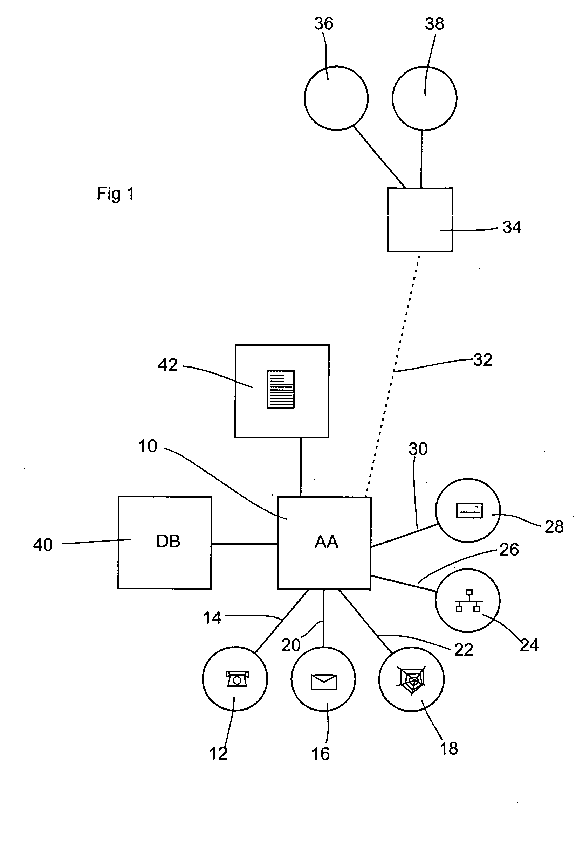

An embodiment of the present invention will now be described by way of example, with reference to the accompanying figure 1 which is a logical diagram of the layout of the system

### DETAILED DESCRIPTION OF THE EMBODIMENT

### System Areas

The following are the principal system areas, described with reference to figure 1.

### Data Acquisition

The system includes an acquisition agent 10, which accepts communications usage data delivered from a variety of communications resources. As described, the agent is capable of accepting usage data from the following types of communications resources, but the skilled person will appreciate that particular embodiments will be capable of accepting usage data from other resources:

### Telephone System

When a call is made or received, a record of the call is created by the telephone system 12. Both traditional PBXs (Private Branch Exchanges) and networks are supported, as well as more recent IP-based PBX solutions.

### Email System

When an email is sent or received, a record is created and stored on the email server 16.

### Proxy Server / Firewall / Switch / Router

When a user accesses the Internet, records are created and stored on the proxy server, firewall, switch or router 18.

### Web Server (Internet & Intranet)

When a user accesses a web server, records are created and stored on the server 24.

### Mobile telephony

When a call is made or received by a mobile phone, the mobile service provider creates a record of the communication. Such records are typically provided to organisations on a CD-ROM and the system can retrieve this information from this CD-ROM. A CD-ROM device 28 is shown, communicating with the server 10 via a standard SCSI or other link 30.

### Remote Sites

Many staff work away from the principal site or sites of an organisation. To cater for this, the system includes an at least semi-permanent data link 32 from the networked computing means to a further computing means 34 to enable the system to obtain data from communications resources 36, 38 elsewhere. The data link 32 can be the Internet or a dial-up connection, for example to a remote PC. Figure 1 shows a single remote connection, but it will be understood that there may be many such sites.

### Corporate Data

### Names, Addresses and Categories

The system maintains a database 40 of communications addresses (telephone numbers, machine names, web & email addresses etc). These addresses are associated with names. These names can relate to an organisation, a department or section, an individual or a piece of equipment. The names can then be assigned to a number of user-definable categories (e.g. customers, suppliers etc) for reporting.

The system provides a comprehensive set of web-based tools to allow users and system administrators to maintain the names, addresses and categories.

### Costing

The system maintains databases of staff, transmission and infrastructure cost rates. The appropriate costs are applied to each communications event to provide a management accounting cost for communications transactions, incoming, outgoing and internal.

### Mode of Operation

### Data Translation

The translation agent converts each system-specific record into an Event Record in common format which is then stored in the database.

### Data Processing

The processing agent extracts a duration from the communications events and performs special processing on web and email data to infer the duration.

For email, the system takes the email size and, using a metric, converts this into duration. The metrics available are as follows:
- Allow n seconds per byte of an email
- Allow n seconds for each email
- Allow n seconds per byte up to a maximum of y bytes

Other metrics could be adopted as desired.

For web, the system takes the events presented in the usage data and compiles them into a *web session.* A web session is defined as all communication with a single web site within a definable timeout period.

### Address-matching

As part of this process, the system attempts to identify both the originating and terminating addresses, assigning a name and/or category/categories to each. Address matching can be performed on either the whole address or a partial address. For example, if the database contained:

| **Address** | **Name** |
|---|---|
| bts.co.uk | BTS Limited |
| js@bts.co.uk | John Smith |

and communications events containing the following addresses were presented:

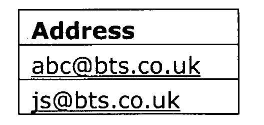

they would be identified as follows:

| **Address** | **Name** |
|---|---|
| abc@bts.co.uk | BTS Limited |
| js@bts.co.uk | John Smith |

The system cannot identify abc@bts.co.uk but can match part of this address to BTS Limited. The system can identify js@bts.co.uk to John Smith.

If the system cannot find a match for the address, it stores it in the database as unassigned.

### Costing

Once the addresses are identified, the event can be costed. The duration multiplied by the staff cost rate (based on relevant grade of staff, date, time of day and day of week) produces the staff cost. The duration and/or size multiplied by the rate for transmission (based on duration, size, destination, media, route, date, time of day and day of week) produces the transmission cost. The duration and/or size multiplied by the rate for infrastructure (based on the equipment types allocated to the user and the location, route, date, time of day and day of week) produces the infrastructure cost.

### Reporting

After the data has been processed, it is available for reporting. The analysis agent provides a comprehensive suite of reports 42 allowing voice, email, web, mobile and other emerging media to be presented together. Reports can be presented in both tabular and graphical form with drill-down to more detailed information. Reports that are typically of use to users include:
- Communications Activity Report
- Direction Summary by Group
- Direction Summary by Time Period
- Event Record List
- Media Summary by Group
- Media Summary by Time Period
- Frequently Contacted Destinations
- Performance Comparison Report
- Zero Contact Report

### Unassigned Data Management

Unassigned Data Management (UDM) is a mechanism to allow unidentified addresses to be identified. A process on the server looks for communication events with unidentified addresses. If the number of events involving a particular unidentified address, within a defined period, exceeds a pre-defined threshold, this address is marked for identification. At regular intervals an email is sent to the appropriate internal individuals asking them to enter details for their unidentified contacts and provides a link to a web page where they can enter the information subject to this information being validated by a moderator. Staff can at this point nominate addresses as private, in which case the address information will not be recorded for future transactions.

It will be appreciated that many variations may be made to the above-described embodiment without departing from the scope of the present invention. Likewise, many of the specific implementation details have been omitted as these will be within the normal coding abilities of the skilled programmer.

## Claims

1. A communications management system, comprising a networked computing means on which is provided:
- a translation agent with access to usage data of a plurality of communications resources,
- a database, provided in a form accessible to the translation agent, and including data in the system-specific format to assist the translation agent to convert this to the common format
- the translation agent being arranged to consolidate the usage data of the plurality of communications resources by consulting the database and converting system-specific data to data having a common format, and
- a processing agent arranged to extract and/or infer duration measurement and to calculate staff, transmission & infrastructure costs.

2. A communications management system according to claim 1 in which the communications resources are selected from the group consisting of PBX telephone systems, IP telephony systems, email servers, proxy servers, firewalls, switches, routers, web servers and mobile telephony and other emerging media.

3. A communications management system according to claim 1 or claim 2, in which the networked computing means includes a removable data storage reader to which the acquisition agent has access, thereby to allow externally created log files to be made available to the translation agent.

4. A communications management system according to claim 3 in which the removable data storage reader is a CD-ROM-compatible drive.

5. A communications management system according to any one of the preceding claims including an at least semi-permanent data link from the networked computing means to a further computing means.

6. A communications management system according to claim 5 in which the at least semi-permanent data link is the Internet.

7. A communications management system according to claim 5 in which the at least semi-permanent data link is a dial-up connection to a remote device.

8. A communications management system according to any one of the preceding claims in which an acquisition agent is provided to acquire usage data of the plurality of communications resources and to provide this to the translation agent.

9. A communications management system according to any one of the preceding claims in which the processing agent is arranged to extract/infer a duration measurement for communications events included in the usage data.

10. A communications management system according to claim 9 in which the processing agent includes at least one rule for inferring a duration measurement in respect of at least communications events without a recorded duration.

11. A communications management system according to claim 10 in which the rule is at least one of:
- a defined time per byte of data transmitted;
- a defined time for any data transmission; and/or
- a defined time per byte of data transmitted up to a defined maximum.

12. A communications management system according to any one of claims 9 to 11 in which the processing agent retains staff cost data for conversion of duration measurements into staff cost.

13. A communications management system according to claim 12 in which the processing agent includes a plurality of staff cost data for a plurality of different staff grades, dates, times of day and days of week.

14. A communications management system according to any one of claims 9 to 11 in which the processing agent retains transmission cost data for conversion of duration and/or size measurements into transmission cost.

15. A communications management system according to claim 14 in which the processing agent includes a plurality of transmission cost data for a plurality of different destinations, media, routes, dates, times of day and days of week.

16. A communications management system according to any one of claims 9 to 11 in which the processing agent retains infrastructure cost data for conversion of duration and/or size measurements into infrastructure cost.

17. A communications management system according to claim 16 in which the processing agent includes a plurality of infrastructure cost data for a plurality of different infrastructure types, locations, routes, dates, times of day and days of week.

18. A communications management system according to any one of claims 1 to 17 in which the processing agent identifies unknown addresses present in the usage data but not contained in the database.

19. A communications management system according to claim 18 in which the processing agent causes a message to be sent where such an unknown address is detected above a pre-set threshold.

20. A communications management system according to claim 19 in which the threshold is defined as a pre-set number of occurrences within a pre-set time interval.

21. A communications management system according to claim 19 or claim 20 in which the message is sent to an address local to the networked computing means and associated with the communications event in which the unknown address was detected.

22. A communications management system according to claim 21 in which the local address is one included in the communications event.

23. A communications management system according to claim 21 in which the local address is one correlated with the local address included in the communications event but associated with a different communications channel.

24. A communications management system according to any one of claims 19 to 23 in which the message is sent via email.

25. A communications management system according to claim 24 in which the email message includes a link to a web page adapted to accept identifying information for the unknown address and update the database accordingly.

26. A communications management system according to any one of the preceding claims in which an analysis agent is provided, capable of selecting, aggregating and summarising the processed data.
